Europäisches Patentamt

European Patent Office

Office européen des brevets

(11) Publication number: **0 233 632**
**B1**

# EUROPEAN PATENT SPECIFICATION

(45) Date of publication of patent specification: **08.08.90**

(21) Application number: **87102218.2**

(22) Date of filing: **17.02.87**

(51) Int. Cl.⁵: **B 60 S 1/48, B 60 S 1/60**

(54) **Headlamp wiper/washer system.**

(30) Priority: **17.02.86 JP 30635/86**

(43) Date of publication of application:
**26.08.87 Bulletin 87/35**

(45) Publication of the grant of the patent:
**08.08.90 Bulletin 90/32**

(84) Designated Contracting States:
**DE SE**

(56) References cited:
**DE-A-2 227 583**
**FR-A-1 345 474**
**FR-A-2 247 898**
**GB-A-1 236 398**
**US-A-3 161 901**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Ono, Eiichi**
**76-2, Onna**
**Atsugi-shi Kanagawa-ken (JP)**
Inventor: **Aoyama, Masutoshi**
**33-10, Kashiwa-cho§Asahi-ku**
**Yokohama-shi Kanagawa-ken (JP)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

This invention relates to a headlamp wiper/washer system for cleaning the transparent surface of areas of headlamps of an automotive vehicle.

In order to remove stains collected on the transparent surface areas of headlamps of an automotive vehicle, a headlamp wiper/washer system has been installed on automotive vehicles. The conventional headlamp wiper/washer system is arranged to drive the washer so as to squirt washer fluid onto the transparent surface areas of the headlamp during four cycles of swinging motion of the wiper and then stop the washer during the subsequent two cycles of swinging motion of the wiper to wipe the used washer fluid.

From US-A-3 161 901 a wiper assembly for windshields or the like is known including a wiper mounted on said automotive vehicle for reciprocating motion to wipe the surface area, wiper drive means are provided for producing a plurality of successive cycles of reciprocating motion of said wiper, and a washer is mounted on said automotive vehicle for squirting washer fluid onto the surface area. A washer drive means is associated with said wiper drive means for driving said washer in synchronism with the reciprocating motion of said wiper control means are provided for controlling the washer fluid squirting operation of said washer. In this prior art system, the control means operates said washer drive means on a multi-cycle operation including at least first, second, third, fourth and fifth cycles occurring successively in this order, each of at least first, second, third, fourth and fifth cycles continuing for an interval substantially equal to the interval of each cycle of reciprocating motion of said wiper.

Although such a conventional system is satisfactory for normal users, its cleaning capacity is not so high as to remove heavy stains.

It is, therefore, an object of the present invention to provide an improved headlamp wiper/washer system which has a higher capacity of cleaning automotive vehicle headlamps with less washer fluid.

This object is achieved by the characterising features of claim 1.

The sub-claims contain preferred embodiments of the present invention.

## Brief Description of the Drawings

This invention will be described in greater detail by reference to the following description taken in connection with the accompanying drawings, in which:

Fig. 1 is a schematic plan view showing one embodiment of a headlamp wiper/washer system made in accordance with the invention;

Fig. 2 is a schematic sectional view of the headlamp wiper/washer system;

Fig. 3 is a plan view showing the relative relationship of parts in one cycle of operation of the headlamp wiper/washer system;

Fig. 4 is a view similar to Fig. 3 showing the relative relationship of the parts in the first cycle of operation of the headlamp wiper/washer system;

Fig. 5 is a view similar to Fig. 4 showing the relative relationship of the parts in the third cycle of operation of the headlamp wiper/washer system;

Fig. 6 is a view similar to Fig. 5 showing the relative relationship of the parts in the fourth cycle of operation of the headlamp wiper/washer system;

Fig. 7 is a view similar to Fig. 6 showing the relative relationship of the parts in the fifth cycles of operation of the headlamp wiper/washer system;

Fig. 8 is a diagram showing the six cycle operation of the headlamp wiper/washer system;

Fig. 9 is a diagram showing the five cycle operation of a modified form of the headlamp wiper/washer system; and

Fig. 10 is a plan view showing a modified form of the contact plate used in the headlamp wiper/washer system.

## Detailed Description of the Invention

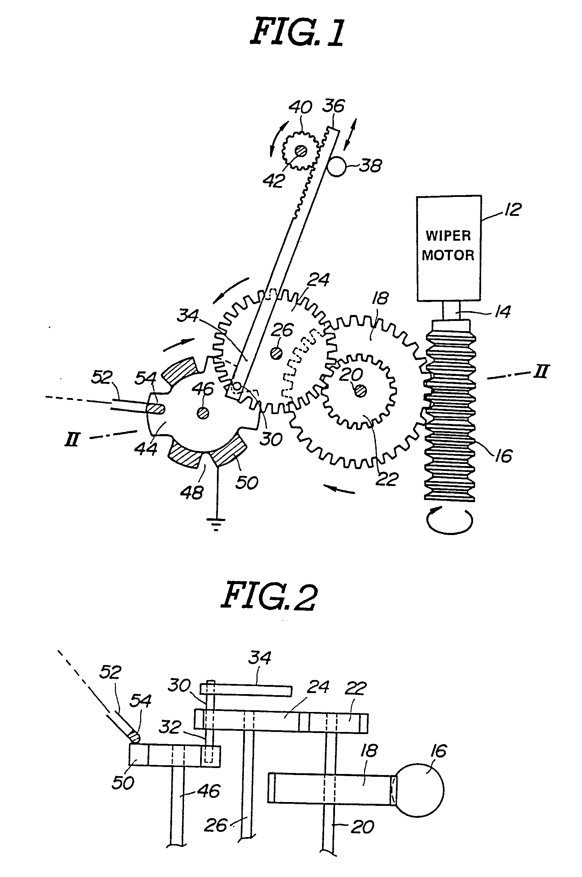

With reference to the drawings, where like numerals refer to like parts in the several views, and in particular to Fig. 1, there is a schematic illustration of a headlamp wiper/washer system embodying the invention. The headlamp wiper/washer system, which is adapted to be carried within a casing (not shown) mounted on an automotive vehicle at an appropriate position adjacent the headlamps, includes a wiper motor 12. The wiper motor 12 has an output shaft 14 having a worm gear 16 secured thereon. The worm gear 16 is in mesh engagement with a drive gear 18 secured to a gear shaft 20 extending perpendicular to the wiper motor output shaft 14. The gear shaft 20 also has a small gear 22 secured thereon. The small gear 22 is in mesh engagement with a worm wheel 24 secured to a gear shaft 26 extending in parallel with the gear shaft 20. The worm wheel 24 has a pin which extends upward therefrom to provide a pivot pin 30 at which an operation rod 34 is pivoted for reciprocating movement in contact with a stationary guide pin 38 with rotation of the worm wheel 24 and it extends downward therefrom to provide an actuating pin 32, as best shown in Fig. 2. The operation rod 34 has a rack 36 held in mesh engagement with a pinion 40 having a pinion shaft 42 secured thereon. The pinion shaft 42 has wiper arms (not shown) secured thereon. Each of the wiper arms has a wiper blade secured thereon through a clamping clip (not shown) in such a manner that the wiper blade wipes the transparent surface of the corresponding headlamp with swinging motion of the wiper arm.

A contact plate 44 is secured on a rotary shaft 46 extending in parallel with the gear shaft 26. The contact plate 44 is shown as formed in its periphery with six V-shaped cutouts 48 to provide six equally-spaced pawls 50. The contact plate 44 has three conductive pawls having a conductive film deposited thereon and connected to ground, and three non-conductive pawls having an insulating film deposited thereon. It is to be understood, of course, that the contact plate 44 may be made of a conductive material in which case an insulating film is deposited on each of the non-conductive pawls with the conductive pawls having no conductive film deposited thereon. Alternatively, the contact plate 44 may be made of an insulating material in which case a conductive film is deposited on each of the conductive pawls with the non-conductive pawls having no insulating film deposited thereon. The reference numeral 52 designates an electrical wire which terminates in an exposed contact 54 urged in a resilient manner into contact with one of the contact pawls 50. The electrical wire 52 is connected to a power source through a washer fluid squirting unit (not shown). This unit operates to squirt a washer fluid onto a plurality of headlamps of an automotive vehicle to clean the same when actuated. The fluid is directed from a washer pump by a main conduit and then branch conduits to nozzles located adjacent the headlamps to be cleaned.

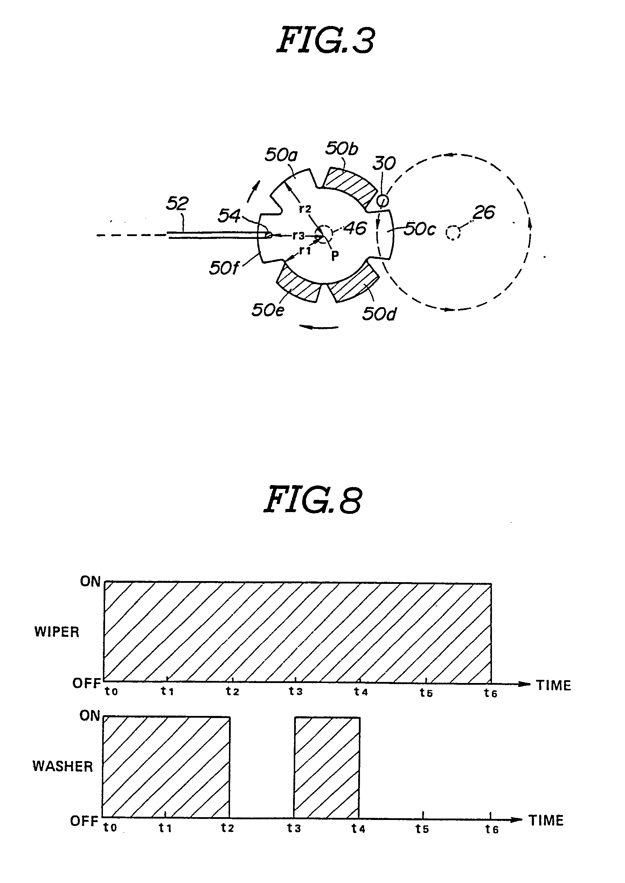

As best shown in Fig. 3, the contact plate 44 is placed in such a manner that the actuating pin 32 can be positioned in one of the cutouts 48 at the start of one operation cycle during which the actuating pin 30 pushes one contact pawl 50 to rotate the contact plate 44 at 60 degrees in a direction indicated by the arrow and then departs from the contact plate 44 with a full rotation of the worm wheel 24. The contact plate 44 is shown as having first, second, third, fourth, fifth and sixth contact pawls 50a, 50b, 50c, 50d, 50e and 50f arranged successively in this order. The contact pawls 50b, 50d and 50e, indicated by the hatched areas, are conductive pawls, and the contact pawls 50a, 50c and 50f are non-conductive or insulating pawls. The contact plate 44, which makes a full rotation with six rotations of the worm wheel 24, works the washer fluid squirting unit on a six cycle operation which changes from one cycle to another each time the worm wheel 24 makes a full rotation. The washer fluid squirting unit is powered to squirt washer fluid onto the headlamps only when the electrical wire exposed contact 54 is in contact with either of the conductive pawls 50b, 50d and 50e.

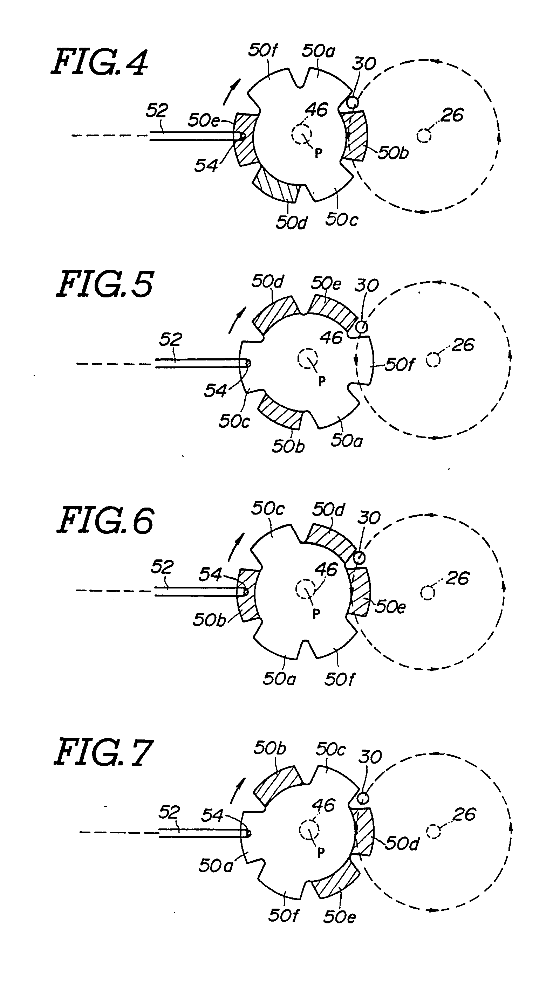

The operation of the headlamp wiper/washer system will be described with reference to Figs. 4 to 8. It is first assumed that the actuating pin 30 is positioned in the cutout provided between the contact pawls 50a and 50b. When, at time t0, a driver actuates a headlamp wiper switch (not shown) installed on an instrument panel, the wiper motor 12 starts operating to rotate the worm gear 16. This rotation is transmitted through the gears 18 and 22 to rotate the worm wheel 24 in the indicated direction, causing the operation rod 34 pivoted on the worm wheel 24 to reciprocate so as to swing the wiper arms secured on the gear shaft 42.

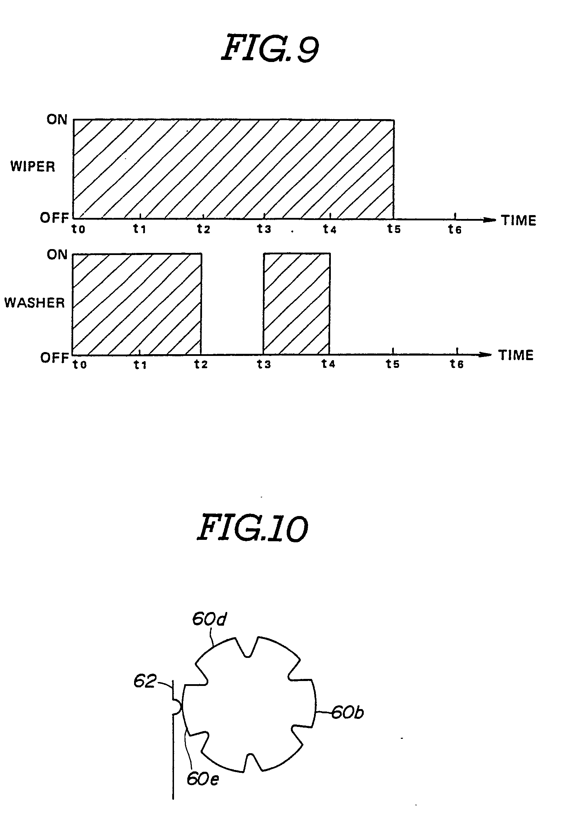

Such rotation also causes the actuating pin 32 to push the contact pawl 50b so as to rotate the contact plate 44 in the indicated direction. As a result, the conductive pawl 50e comes into contact with the electrical wire exposed contact 54 to start the washer fluid squirting unit squirting a washer fluid onto the headlamps. The washer fluid squirting unit continues to squirt the washer fluid onto the headlamps as long as the electrical wire exposed contact 54 is in contact with the conductive pawl 50e, as shown in Fig. 4. After the actuating pin 32 pushes to rotate the contact plate 44 through 60 degrees, it separates from the contact pawl 50b and the contact plate 44 stops it from rotating at the position where the electrical wire exposed contact 54 remains in contact with the conductive pawl 50d. This condition continues until the actuating pin 32 comes into abutment against the next contact pawl 50f at time t1. Therefore, this first cycle continues for a time interval from time t0 to time t1 during which the worm wheel 24 makes a full rotation, causing the wiper arms to swing one cycle and the washer fluid squirting unit to squirt the washer fluid onto the headlamp. As a result, the wiper blades wipe the transparent surfaces of the respective headlamps to clean the same with a washer fluid squirted thereon, as shown in Fig. 8.

At time t1, the actuating pin 30 comes into abutment with the next contact pawl 50a and starts rotating the contact plate 44 again. In the second cycle, the electrical wire exposed contact is in contact with the conductive pawl 50d so that the washer fluid squirting unit operates to squirt the washer fluid onto the headlamps. As a result, the wiper blades wipe the respective headlamps to clean the stains with the washer fluid squirted thereon during the second cycle which continues for a time interval from time t1 to time t2, as shown in Fig. 8.

At time t2, the actuating pin 30 comes into abutment with the next contact pawl 50f and starts rotating the contact plate 44 again. In the third cycle, the electrical wire exposed contact is in contact with the insulating pawl 50c, as shown in Fig. 5, so that the washer fluid squirting unit stops squirting the washer fluid. As a result, the wiper blades wipe the transparent surfaces of the respective headlamps to remove the used washer fluid from the headlamps during the third cycle which continues for a time interval from time t2 to time t3, as shown in Fig. 8.

At time t3, the actuating pin 30 comes into abutment with the next contact pawl 50e and starts rotating the contact plate 44 again. In the fourth cycle, the electrical wire exposed contact 54 is in contact with the conductive pawl 50b, as shown in Fig. 6, so that the washer fluid squirting unit operates to squirt the washer fluid onto the headlamps. As a result, the wiper blades wipe the transparent surfaces of the respective headlamps to clean the residual stains therefrom with the washer fluid squirted thereon during the fourth cycle which continues for a time interval from time t3 to t4, as shown in Fig. 8.

At time t4, the actuating pin 30 comes into abutment with the next contact pawl 50d and starts rotating the contact plate 44 again. In the fifth cycle, the electrical wire exposed contact 54 is in contact with the insulating pawl 50a, as shown in Fig. 7, so that the washer fluid squirting unit stops squirting the washer fluid. As a result, the wiper blades wipe the transparent surfaces of the respective headlamps to remove the used washer fluid during the fifth cycle which continues for a time interval from time t4 to time t5, as shown in Fig. 8.

At time t5, the actuating pin 30 comes into abutment with the next contact pawl 50c and starts rotating the contact plate 44 again. In the sixth cycle, the electrical wire exposed contact 54 is in contact with the insulating pawl 50f so that the washer fluid squirting unit stops squirting the washer fluid. As a result, the wiper blades wipe the transparent surfaces of the respective headlamps to remove the residual washer fluid during the sixth cycle which continues for a time interval from time t5 to time t6 at which the actuating pin 30 comes into abutment with the first contact pawl 50b.

This six cycle operation may be repeated, if necessary, until the driver releases the headlamp wiper switch. Although the contact plate 44 has been described as having conductive pawls 50b, 50d and 50e, it will be appreciated that the invention is not limited in any way to such a contact plate arrangement as long as at least one insulating pawl is successive to one of the conductive pawls and at least one additional insulating pawl is successive to another one of the conductive pawls. For example, the contact pawls 50a, 50b and 50e may be conductive pawls with the other contact pawls being insulating pawls.

In addition, although the contact plate 44 has been described as having six contact pawls to work the washer fluid squirting unit on a six cycle operation, the invention is limited in no way to such an arrangement. For example, the contact plate 44 may have five contact pawls to work the washer fluid squirting unit on a five cycle operation, as shown in Fig. 9.

Fig. 10 shows a modified form of the contact plate which is substantially the same as the contact plate of Fig. 3 except that each of the conductive pawls 60b, 60d and 60e has a conductive film deposited on the circumferential surface thereof. In this modification, a contact 62 is provided for sliding movement on the circumferential surface of the contact plate.

It is, therefore, apparent from the foregoing that the inventive headlamp wiper/washer system consumes far less washer fluid and requires a smaller-sized washer fluid tank than does the conventional system.

## Claims

1. A headlamp wiper/washer system for cleaning the surface area of at least one headlamp of an automotive vehicle, including a wiper mounted on said automotive vehicle for reciprocating motion to wipe the headlamp surface area, wiper drive means (12, 14, 16, 18, 20, 22, 24, 26, 30, 34, 36, 38, 40, 42) for producing a plurality of successive cycles of reciprocating motion of said wiper, a washer mounted on said automotive vehicle for squirting washer fluid onto the headlamp surface area, a washer drive means associated with said wiper drive means for driving said washer in synchronism with the reciprocating motion of said wiper, and control means (44, 46, 48, 50, 52, 54) for controlling the washer fluid squirting operation of said washer, wherein said control means (44, 46, 48, 50, 52, 54) operates said washer drive means on a multi-cycle operation including at least first, second, third, fourth and fifth cycles occurring successively in this order, each of at least first, second, third, fourth and fifth cycles continuing for an interval substantially equal to the interval of each cycle of reciprocating motion of said wiper, characterized in that said control means (44, 46, 48, 50, 52, 54) enabling said washer to squirt washer fluid onto the headlamp surface area during the first, second and fourth cycles, said control means (44, 46, 48, 50, 52, 54) disabling said washer to stop squirting the washer fluid during said third and fifth cycles.

2. The headlamp wiper/washer system according to claim 1, characterized in that said multi-cycle operation includes a sixth cycle, and that said control means (44, 46, 48, 50, 52, 54) disables said washer to stop squirting the washer fluid also during said sixth cycle.

3. The headlamp wiper/washer system as claimed in claim 1 or 2, wherein said control means includes a contact plate (44) mounted for rotation, said contact plate (44) having a plurality of conductive pawls (50b, 50d, 50e; 60b, 60d, 60e), at least one insulating pawl (50a, 50c, 50f) successive to one of said conductive pawls (50b, 50d, 50e) and at least one additional insulating pawl (50a, 50c, 50f) successive to another one of said conductive pawls (50b, 50d, 50e), means for rotating said contact plate (44) in synchronism with the reciprocating motion of said wiper, and contact means (52, 54; 62) positioned with respect to said contact plate (44) for successive contact with said pawls (50b, 50d, 50e) to enable said washer to squirt fluid only when said contact means (52, 54; 62) is in contact with said conductive pawls (50b, 50d, 50e).

4. The headlamp wiper/washer system as claimed in claim 2, wherein said control means including a contact plate (44) mounted for rotation, said contact plate having first, second, third, fourth, fifth and sixth contact pawls arranged successively in this order, means for rotating said contact plate in synchronism with the reciprocating motion of said wiper, and contact means (52, 54; 62) positioned with respect to said contact plate (44) for successive contact with said contact pawls to enable said washer to squirt fluid only when said contact means is in contact with said first, second and fourth pawls (50b, 50d, 50e).

## Patentansprüche

1. Scheinwerfer-Wisch/Waschanlage zum Säubern der Oberfläche wenigstens eines Scheinwer-

fers eines Kraftfahrzeugs, mit einem Wischer, der an dem Kraftfahrzeug angebracht ist für eine hin- und hergehende Bewegung, um die Scheinwerferoberfläche zu wischen, einer Wischerantriebseinrichtung (12, 14, 16, 18, 20, 22, 24, 26, 30, 34, 36, 38, 40, 42) zum Erzeugen einer Mehrzahl von aufeinanderfolgenden Zyklen von hin- und hergehender Bewegung des Wischers, einer Waschvorrichtung, die an dem Kraftfahrzeug angebracht ist, um Waschfluid auf die Scheinwerferoberfläche zu spritzen, einer Waschvorrichtungantriebseinrichtung, die mit der Wischerantriebseinrichtung zum Antreiben der Waschvorrichtung synchron mit der hin- und hergehenden Bewegung des Wischers verbunden ist, und mit einer Steuereinrichtung (44, 46, 48, 50, 52, 54) zum Steuern des Waschfluidspritzvorgangs der Waschvorrichtung, wobei die Steuereinrichtung (44, 46, 48, 50, 52, 54) die Waschvorrichtungantriebseinrichtung auf einem Multizyklusvorgang betätigt, der wenigstens einen ersten, zweiten, dritten, vierten und fünften Zyklus umfaßt, die aufeinanderfolgend in dieser Reihenfolge auftreten, wobei jeder des wenigstens ersten, zweiten, dritten, vierten und fünften Zyklus während eines Intervalls andauert, das im wesentlichen gleich dem Intervall eines jeden Zyklus der hin- und hergehenden Bewegung des Wischers ist, dadurch gekennzeichnet, daß die Steuereinrichtung (44, 46, 48, 50, 52, 54) der Waschvorrichtung ermöglicht, Waschfluid auf die Scheinwerferoberfläche zu spritzen während des ersten, zweiten und vierten Zyklus, und die Steuereinrichtung (44, 46, 48, 50, 52, 54) die Waschvorrichtung hindert, Waschfluid während dem dritten und fünften Zyklus zu spritzen.

2. Scheinwerfer-Wisch/Waschanlage nach Anspruch 1, dadurch gekennzeichnet, daß der Multizyklusvorgang einen sechsten Zyklus umfaßt, und daß die Steuereinrichtung (44, 46, 48, 50, 52, 54) die Waschvorrichtung daran hindert, ebenfalls während des sechsten Zyklus Waschfluid zu spritzen.

3. Scheinwerfer-Wisch/Waschanlage nach Anspruch 1 oder 2, wobei die Steuereinrichtung eine Kontaktplatte (44) umfaßt, die drehbeweglich angebracht ist, wobei die Kontaktplatte (44) eine Mehrzahl von leitenden Zungen oder Klauen (50b, 50d, 50e; 60b, 60d, 60e) aufweist, wobei wenigstens eine isolierende Klaue (50a, 50c, 50f) auf eine leitende Klaue (50b, 50d, 50e) folgt und wenigstens eine zusätzliche isolierende Klaue (50a, 50c, 50f) auf eine andere der leitenden Klauen (50b, 50d, 50e) folgt, eine Einrichtung zum Drehen der Kontaktplatte (44) synchron mit der Hin- und Herbewegung des Wischers, und eine Kontakteinrichtung (52, 54; 62) umfaßt, die bezüglich der zweiten Kontaktplatte (44) angeordnet ist für einen aufeinanderfolgenden Kontakt mit den Klauen (50b, 50d, 50e) um die Waschanlage anzuregen, Fluid nur zu spritzen, wenn die Kontakteinrichtung (52, 54; 62) in Kontakt mit den leitenden Klauen (50b, 50d, 50e) steht.

4. Scheinwerfer-Wisch/Waschanlage nach Anspruch 2, wobei die Steuereinrichtung eine Kontaktplatte (44) umfaßt, die drehbeweglich gelagert ist, wobei die Kontaktplatte eine erste, zweite, dritte, vierte, fünfte und sechste Kontaktklaue aufweist, die in dieser Reihenfolge aufeinanderfolgend angeordnet sind, eine Einrichtung zum Drehen der Kontaktplatte synchron mit der Hinund Herbewegung des Wischers, und eine Kontakteinrichtung (52, 54; 62) umfaßt, die bezüglich der Kontaktplatte (44) angeordnet ist für einen aufeinanderfolgenden Kontakt mit den Kontaktklauen, um die Waschvorrichtung anzuregen, Fluid nur zu spritzen, wenn die Kontakteinrichtung in Kontakt mit der ersten, zweiten und vierten Klaue (50b, 50d, 50e) steht.

**Revendications**

1. Système d'essuyage et de lavage de phare pour nettoyer la surface d'au moins un phare d'un véhicule automobile, comprenant un balai monté sur ledit véhicule automobile pour un mouvement alternatif pour essuyer la surface du phare, un moyen d'entraînement du balai (12, 14, 16, 18, 20, 22, 24, 26, 30, 34, 36, 38, 40, 42) pour produire un certain nombre de cycles successifs du mouvement alternatif dudit balai, un laveur monté sur ledit véhicule automobile pour faire jaillir le fluide de lavage sur la surface du phare, un moyen d'entraînement du laveur associé audit moyen d'entraînement du balai pour entraîner ledit laveur en synchronisme avec le mouvement alternatif dudit balai, et un moyen de commande (44, 46, 48, 50, 52, 54) pour contrôler l'opération d'éjection du fluide du laveur par ledit laveur, où ledit moyen de commande (44, 46, 48, 50, 52, 54) fait fonctionner ledit moyen d'entraînement du laveur par une opération multicycle comprenant au moins des premier, second, troisième, quatrième et cinquième cycles se produisant en succession dans cet ordre, chacun d'au moins les premier, second, troisième, quatrième et cinquième cycles continuant pendant un intervalle sensiblement égal à l'intervalle de chaque cycle du mouvement alternatif dudit balai, caractérisé en ce que ledit moyen de commande (44, 46, 48, 50, 52, 54) permet audit laveur d'éjecter le fluide de lavage sur la surface du phare pendant les premier, second et quatrième cycles, ledit moyen de commande (44, 46, 48, 50, 52, 54) inhibant ledit laveur pour arrêter l'éjection du fluide de lavage pendant lesdits troisième et cinquième cycles.

2. Système d'essuyage et de lavage de phare selon la revendication 1, caractérisé en ce que ladite opération multicycle comprend un sixième cycle et en ce que ledit moyen de commande (44, 46, 48, 50, 52, 54) inhibe ledit laveur pour arrêter l'éjection du fluide de lavagé également pendant ledit sixième cycle.

3. Système d'essuyage et de lavage de phare selon la revendication 1 ou 2, où ledit moyen de commande comporte une plaque de contact (44) montée pour une rotation, ladite plaque de contact (44) ayant un certain nombre de cliquets conducteurs (50b, 50d, 50e; 60b, 60d, 60e), au moins un cliquet isolant (50a, 50c, 50f) en succession de l'un desdits cliquets conducteurs (50b, 50d, 50e) et au moins un cliquet isolant additionnel (50a, 50c, 50f) en suivant un autre desdits cliquets conducteurs (50b, 50d, 50e), un moyen pour faire tourner ladite plaque de contact (44) en synchronisme avec le mouvement alternatif dudit balai, et un moyen de contact (52, 54; 62) placé, par rapport à ladite plaque de contact (44), pour un contact en succession avec lesdits cliquets (50b, 50d, 50e) pour permettre audit laveur d'éjecter le fluide uniquement quand ledit moyen de contact (52, 54; 62) est en contact avec lesdits cliquets conducteurs (50b, 50d, 50e).

4. Système d'essuyage et de lavage de phare selon la revendication 2, où ledit moyen de commande comprend une plaque de contact (44) montée pour une rotation, ladite plaque de contact ayant des premier, second, troisième, quatrième, cinquième et sixième cliquets de contact agencés en succession dans cet ordre, un moyen pour faire tourner ladite plaque de contact en synchronisme avec le mouvement alternatif dudit balai et un moyen de contact (52, 54; 62) placé par rapport à ladite plaque de contact (44) pour un contact successif avec lesdits cliquets de contact pour permettre audit laveur de n'éjecter le fluide que lorsque ledit moyen de contact est en contact avec lesdits premier, second et quatrième cliquets (50b, 50d, 50e).

# FIG. 1

# FIG. 2

# FIG.3

# FIG.8

FIG.4

FIG.5

FIG.6

FIG.7

## FIG.9

## FIG.10